Europäisches Patentamt

European Patent Office

Office européen des brevets

(11) Veröffentlichungsnummer: **0 233 521**
**B1**

(12) **EUROPÄISCHE PATENTSCHRIFT**

(45) Veröffentlichungstag der Patentschrift: **12.09.90**

(21) Anmeldenummer: **87101244.9**

(22) Anmeldetag: **29.01.87**

(51) Int. Cl.⁵: **B 01 D 3/00**, B 01 J 19/02, B 32 B 27/08

(54) Flächige, korrosionsbeständige Apparateteile.

(30) Priorität: **08.02.86 DE 3604013**

(43) Veröffentlichungstag der Anmeldung:
**26.08.87 Patentblatt 87/35**

(45) Bekanntmachung des Hinweises auf die Patenterteilung:
**12.09.90 Patentblatt 90/37**

(84) Benannte Vertragsstaaten:
**CH DE FR GB IT LI NL**

(56) Entgegenhaltungen:
**US-A-4 166 536**

**CHEM. TECHN., Band 24, Nr. 11, November 1972, Seiten 692-694; L. WEINER: "Einsatz von Plastwerkstoffen für Kolonneneinbauten in der chemischen Industrie"**

(73) Patentinhaber: **BAYER AG**
**D-5090 Leverkusen 1 Bayerwerk (DE)**

(72) Erfinder: **Simon, Gerhard, Dipl.-Ing.**
**Neukronenberger-Strasse 3**
**D-5090 Leverkusen 3 (DE)**
Erfinder: **Hahnel, Peter, Dipl.-Ing.**
**Dürscheider Weg 15**
**D-5090 Leverkusen 3 (DE)**
Erfinder: **Hoffmann, Erhard-Günther, Dr.**
**Schlipperhaus 75**
**D-4030 Ratingen 6 (DE)**

(56) References cited:
**CHEMICAL ABSTRACTS, Band 103; Nr. 18, 4. November 1985, SeiTe44, Abstract Nr. 143006n, Columbus, Ohio, US; H.P. HARTIG et al.: "Plastics in chemical equipment and piping manufacture. High economy due to corrosion resistance and good hydraulic properties."; & KUNSTSTOFFBERATER, 1985, 30(1-2), 24-7**

**Beschreibung**

Die Erfindung betrifft flächige, korrosionsbeständige Apparatebauteile, insbesondere Kolonnenböden, mit großer Formstabilität unter thermischen und mechanischen Wechselbeanspruchungen, bestehend aus einem mehrschichtigen Aufbau aus Polymeren.

Bischer wurden im Apparatebau bei Bauteilen, die stark wechselnden Temperaturen und/oder aggressiven Medien ausgesetzt sind, hochwertige Metalle wie Zirkonium, Tantal, Hastelloy eingesetzt. Diese Werkstoffe haben den Nachteil, daß sie sehr teuer sind und trotzdem in bestimmten Einsatzfällen einer Korrosion unterliegen.

Bekannt sind auch Bauteile aus Glas oder Graphit. Diese besitzen zwar eine gute Korrosionsbeständigkeit. Da bei diesen Werkstoffen die Beigefestigkeit bei dynamischer Beanspruchung und die Stoßfestigkeit gering sind, können nur Teile mit verhältnismäßig kleinen Abmessungen in der Praxis eingesetzt werden, wodurch eine wirtschaftliche Nutzung in Produktionsanlagen nicht möglich ist.

Weiter werden massive Kunststoffe im Apparatebau eingesetzt, die je nach Einsatzprodukt zu Korrosion neigen können und oft eine geringe Formstabilität bei wechselnden Temperaturbeanspruchungen aufweisen.

Schließlich gibt es kunststoffplattierte Metallkonstruktionen, bei denen infolge unterschiedlicher Wärmeausdehnungskoeffizienten durch thermische und mechanische Wechselbeanspruchung Ablöseerscheinungen, Risse bzw. Unterschichtkorrosionen auftreten können.

Ferner sind auch selbsttragende Bauteile bekannt, die bei Anwendung der Thermoplast/Glasfaserverstärketer Kunststoff — Verbundweise gefertigt werden CHEM. TECHN., Band 24, Nr. 11, November 1972, Seiten 692—694: L. WEINER: "Einsatz von Plastwerkstoffen für Kolonneneinbauten in der chemischen Industrie".

Aufgabe der Erfindung ist es, korrosionsbeständige Apparatebauteile zu finden, die bei hoher thermischer und mechanischer Wechselbeanspruchung ihre Formstabilität — insbesondere Ebenheit — beibehalten und deren Abmessung im Durchmesser bzw. Kantenlänge> 0,6 m, insbesondere> 1,0 m, bei einem Verhältnis Länge/Wanddicke von 20 bis 40 sind.

Die Aufgabe wurde erfindungsgamäß dadurch gelöst, daß als mehrschichtiger Aufbau ein tragender, stabiler Kern aus glasfaserverstärktem Kunststoff allseitig mit einem Mantel aus thermisch und/oder chemisch beständigen Polymeren fest verbunden ist.

Bevorzugte Ausführungen der erfindungsgemäßen Apparatebauteile sind den abhängigen Ansprüchen zu entnehmen.

Durch intensiven Verbund von stabilem Kern und korrosionsbeständigem Mantel entsteht ein System, das infolge Nutzung jeweils der optimalen Funktionen der einzelnen Schichten sich neben der chemischen und thermischen Beständigkeit vor allem durch hohe Formstabilität auszeichnet.

Es ist also erstmals möglich, Kolonnenböden aus Kunststoffen für hohe thermische und chemische Belastung mit einem Durchmesser größer als 1 m herzustellen, wobei die Durchbiegung kleiner als 1 mm/l m bei Temperaturen von über 100°C und Belastung von 50 kg ist. Hierdurch können auch bei aggressiven Medien anstelle der Füllkörperkolonnen in Zukunft Glockenbodenkolonnen eingesetzt werden, die sich durch wesentlich höhere Belastung — und Konzentrationsbandbreiten — auszeichnen.

Als Verstärkung für den Kern haben sich Glasfasern oder Kohlenstoffasern bewährt, wobei der Gehalt an Verstärkungsfasern zwischen 50% und 70% liegen sollte. Der Kunststoff kann aus Epoxid-, Furan- oder Phenolharz bestehen. Diese Kunststoffe haben ihrerseits eine deutlich bessere chemische Beständigkeit als z.B. tragende Konstruktionen aus Stahl, wodurch die Notaufeigenschaften deutlich verbessert werden. Der Kern kann aus einer vorgepreßten Platte bestehen oder gemeinsam mit einer Deckschicht direkt in einer Form naßgepreßt werden.

Es hat sich gezeigt, daß ein Mantel schon bei geringen Stärken (3, 4, 5 mm) eine Diffusion von aggressiven Medien verhindert, so daß eine Zerstörung des darunterliegenden Harzes nicht eintritt. Die Einsatzbreite des Mantelwerkstoffes kann durch Hinzufügen von elektrisch leitfähigen Füllstoffen noch verbessert werden. Als polymer Werkstoffe sind zu nennen: Thermoplaste, Duroplaste, Elastomere und Gummi. Diese Werkstoffe werden in Form von geschweißten Tafeln aufgeklebt oder durch Laminieren, durch Spritzen oder andere Beschichtungsverfahren auf den Kern aufgetragen.

Die verbindung zwischen Deckschicht und tragendem Kern erfolgt entweder über ein mit Kunstharz versehender Netzwerk (z.B. aus einem synthetischen Feingewebe, das in einem Epoxid- Harz eingebettet ist) oder direkt über den Deckschichtwerkstoff.

Eine Beispiel der Erfindung ist in der Zeichnung dargestellt und wird im folgenden näher beschrieben.

Es zeigen:

Figur 1: Daraufsicht auf Glockenboden

Figur 2: Schnitt durch Glockenboden

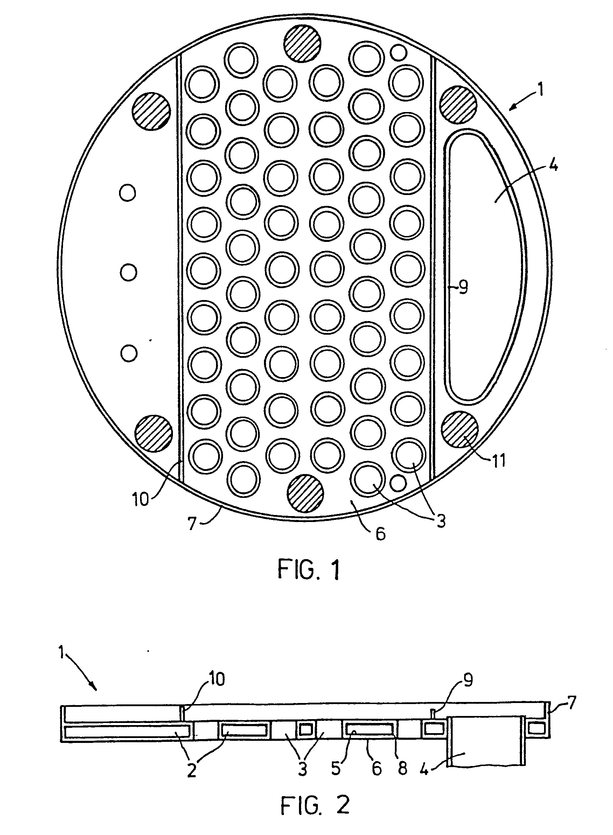

In Figur 1 und 2 ist ein Glockenboden 1 eines Destillierturmes (nicht gezeichnet) dargestellt, der aus einem kreisförmigen Kern 2 mit einer Stärke von 24 mm aus Glasfaser ver stärktem Kunststoff besteht und mit einer Anzahl Bohrungen 3 für die Glocken bzw. einem größeren Durchgang 4 für den Ablauf versehen ist. Die Oberfläche des Glokkenbodens 1 einschließlich der senkrechten Wandungen ist über ein harzgetränktes Netzwerk 5 aus Feingewebe mit Platten 6 aus elektrisch leitfähigem PVDF als Mantel 7 eingekleidet (Stärke des Mantels (7/: mindestens 3 mm.), die an den Stoßstellen 8 dicht miteinander verschweißt sind. Die überlaufwehre 9 bestehen ebenfalls aus PVDF. Die übereinander im Destillierturm angeordneten Glockenböden 1 stützen sich aufeinander durch Distanzstücke 10 ab.

## Patentansprüche

1. Flächige, korrosionsbeständige Apparatebauteile, insbesondere Kolonnenböden, mit großer Formstabilität unter thermischen und mechanischen Wechselbeanspruchungen, bestehend aus einem mehrschichtigen Aufbau aus Polymeren, dadurch gekennzeichnet, daß als mehrschichtiger Aufbau (1) ein tragender, stabiler Kern (2) aus glasfaserverstärktem Kunststoff allseitig mit einem Mantel (7) aus thermisch und/ oder chemisch beständigen Polymeren fest verbunden ist.

2. Flächige, korrosionsbeständige Apparatebauteile nach Anspruch 1, dadurch gekennzeichnet, daß Kern (2) und Mantel (7) über ein mit Kunstharz versehendes Netzwerk (5) verbunden sind.

3. Flächige, korrosionsbeständige Apparatebauteile nach Anspruch 1, dadurch gekennzeichnet, daß der verstärkte Kunststoff aus einem Epoxid- Harz mit Glasfaser (EP—GF) besteht.

4. Flächige, korrosionsbeständige Apparatebauteile nach Anspruch 1 bis 3, dadurch gekennzeichnet, daß der Mantel (7) mit einer Stärke von mindestens 3 mm aus einem Polyvinyliden-Fluorid (PVDF) besteht.

5. Flächige, korrosionsbeständige Apparatebauteile nach Anspruch 4, dadurch gekennzeichnet, daß der Mantel (7) elektrisch leitfähig ist.

6. Flächige, korrosionsbeständige Apparatebauteile nach Anspruch 2 bis 5, dadurch gekennzeichnet, daß das Netzwerk (5) aus einem synthetischen Feingewebe in einem Epoxid- Harz eingebettet ist.

## Revendications

1. Pièces de constuction d'appareils planes et résistant à la corrosion, en particulier des plateaux de colonnes, ayant une grande indéformabilité sous des sollicitations thermiques et mécaniques alternées, consistant en une construction multicouche en polymères, caractérisées en ce qu'une âme porteuse stable (2) en matière plastique armée de fibres de verre, sur toutes les faces de laquelle est fixée une enveloppe (7) en polymère résistant à la chaleur et/ou aux substances chimiques, constitue la construction multicouche (1).

2. Pièces de construction d'appareils planes et résistant à la corrosion selon la revendication 1, caractérisées en ce que l'âme (2) et l'enveloppe (7) sont liées entre elles par une structure maillée (5) pourvue d'un résine synthétique.

3. Pièces de construction d'appareils planes et résistant à la corrosion selon la revendication 1, caractérisées en ce que la matière plastique armée consiste en bune résine époxy renfermant des fibres de verre (EP—GF).

4. Pièces de construction d'appareils planes et résistant à la corrosion selon la revendications 1 à 3, caractérisées en ce que l'enveloppe (7) d'une épaisseur d'aun moins 3 mm consiste en un fluorure de polyvinylidène (PVDF).

5. Pièces de construction d'appareils planes et résistant à la corrosion selon la revendication 4, caractérisées en ce que l'enveloppe (7) est électriquement cnductrice.

6. Pièces de construction d'appareils planes et résistant à la corrosion selon l'une des revendications 2 à 5, caractérisées en ce que le treillis (5) formé d'une toile fine synthétique est enrobé dans une résine époxy.

## Claims

1. Flat, corrosion-resistant apparatus parts, particularly column trays, having high dimensional stability under repeated thermal and mechanical stressing, consisting of a multilayer construction of polymers, characterized in that a strong, stable core (2) of glass-fibre-reinforced plastic is firmly joined on all sides to a shell (7) of thermally and/ or chemically stable polymers as the multilayer construction (1).

2. Flat, corrosion-resistant apparatus parts as claimed in claim 1, characterized in that the core (2) and shell (7) are joined by a network (5) provided with synthetic resin.

3. Flat, corrosion-resistant apparatus parts as claimed in claim 1, characterized in that the reinforced plastic consists of an epoxy resin with glass fibres (EP—GF).

4. Flat, corrosion-resistant apparatus parts as claimed in claims 1 to 3, characterized in that the shell (7), which has a thickness of at least 3 mm, consists of a polyvinylidene fluoride (PVDF).

5. Flat, corrosion-resistant apparatus parts as claimed in claim 4, characterized in that the shell (7) is electrically conductive.

6. Flat, corrosion-resistant apparatus parts as claimed in claims 2 to 5, characterized in that the network (5) consists of a fine synthetic woven fabric embedded in an epoxy resin.

FIG. 1

FIG. 2